**Europäisches Patentamt**

**European Patent Office**

**Office européen des brevets**

(19)

(11) Numéro de publication : **0 412 886 B1**

(12)

# FASCICULE DE BREVET EUROPEEN

(45) Date de publication du fascicule du brevet :
**14.09.94 Bulletin 94/37**

(21) Numéro de dépôt : **90402234.0**

(22) Date de dépôt : **03.08.90**

(51) Int. Cl.⁵ : **H04N 5/33**

(54) **Système de prise de vues bispectrales et de visualisation en fausses couleurs.**

(30) Priorité : **08.08.89 FR 8910663**

(43) Date de publication de la demande :
**13.02.91 Bulletin 91/07**

(45) Mention de la délivrance du brevet :
**14.09.94 Bulletin 94/37**

(84) Etats contractants désignés :
**DE GB IT**

(56) Documents cités :
**FR-A- 2 612 030**
**US-A- 3 571 504**

(72) Inventeur : **Poque, Jean-Louis**
**Thomson-CSF,**
**SCPI - Cédex 67**
**F-92045 Paris La Défense (FR)**
Inventeur : **Gillet, Claude**
**Thomson-CSF,**
**SCPI - Cédex 67**
**F-92045 Paris La Défense (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(73) Titulaire : **THOMSON-CSF**
**173, Boulevard Haussmann**
**F-75008 Paris (FR)**

## Description

L'invention concerne un système de prise de vues bispectrales et de visualisation en fausses couleurs, applicable notamment à la visée et à la poursuite de cibles.

Pour une telle application, les caméras vidéo de prise de vues utilisent généralement un capteur au silicium, ayant l'avantage de résister aux forts éclairements, et d'avoir une sensibilité spectrale s'étendant du domaine des radiations visibles jusqu'au domaine des radiations infrarouges proches. L'expérience a montré que le domaine des radiations visibles, de longueur d'onde 0,4 à 0,7 micron, et le domaine des radiations infrarouges proches, de longueur d'onde comprise entre 0,7 et 1 micron, doivent être utilisés séparément pour les raisons suivantes.

La traversée de l'atmosphère par des rayons lumineux, sur le parcours qui sépare la scène observée et la caméra, provoque une atténuation de l'intensité et une réduction du contraste de ces rayons lumineux. L'atténuation n'est pas la même pour toutes les longueurs d'ondes, et elle dépend des conditions atmosphériques : la visibilité atmosphérique, la nature des aérosols en suspension dans l'atmosphère, etc ... Dans de nombreux cas les radiations infrarouges sont moins atténuées que les radiations visibles. La réduction du contraste est due à la diffusion de la lumière par des particules en suspension dans l'atmosphère. La réduction de contraste dépend, elle aussi, des conditions atmosphériques ; et les radiations visibles et les réductions infrarouges ne sont pas affectées par la même réduction de contraste.

La scène observée est elle-même différente selon qu'elle est observée dans le domaine des radiations infrarouges ou dans le domaines des radiations visibles. Le contraste d'une cible par rapport au fond de l'image peut être différent dans ces deux domaines. Dans le cas, très courant, où le fond est constitué de végétation, le contraste est systématiquement de signe opposé dans ces deux domaines. Par exemple, une construction en béton entourée d'herbes apparaît claire sur un fond sombre, dans le domaine des radiations visibles, et apparaît sombre sur un fond clair dans le domaine des radiations infrarouges.

Cependant, l'observation dans le domaine des radiations visibles et l'observation dans le domaine des radiations infrarouges présentent chacune un intérêt. Selon les conditions atmosphériques, et selon la scène observée, il est plus intéressant d'observer la scène dans l'un ou l'autre domaine.

A cause de l'inversion de contraste, aux environs de la longueur d'onde de 0,7 micron, il n'est pas possible d'utiliser un même capteur pour les deux domaines, sinon l'image obtenue a un contraste qui est la moyenne des contrastes dans les deux domaines, c'est-à-dire un contraste très faible. Un capteur au silicium ne peut donc pas être utilisé dans la totalité de son domaine de sensibilité.

Classiquement, les caméras vidéo utilisées dans les systèmes d'armes sont équipées d'un dispositif de filtrage commutable. L'opérateur dispose d'une commande manuelle permettant de filtrer soit les radiations visibles, soit les radiations infrarouges. L'opérateur fait ce choix en fonction de l'image qu'il observe sur l'écran d'un moniteur monochrome, en recherchant le meilleur contraste. En pratique, l'opérateur n'a pas toujours le temps, ni la possibilité, de remettre en cause le choix qu'il a fait quelques minutes auparavant. Pourtant, si la distance entre la caméra et la cible a changé, le contraste maximum peut ne plus être dans le domaine spectral qui a été choisi : à grande distance, l'atténuation des faisceaux lumineux et la dégradation de leur contraste par la lumière diffusée sont plus modérées dans le domaine des radiations infrarouges. Par contre, si la caméra se rapproche de la cible, il peut arriver que le contraste devienne plus important dans le domaine des radiations visibles.

Dans les cas où la distance varie rapidement, il est délicat de changer le filtrage. Dans les systèmes classiques, le changement du filtrage entraîne une brève perte d'images qui peut éventuellement faire décrocher une poursuite automatique de cible, réalisée au moyen de cette caméra. En pratique, l'utilisateur ne prend pas ce risque et conserve donc le même filtrage.

Pour exploiter simultanément le domaine des radiations visibles et le domaine des radiations infrarouges proches, il est envisageable de réaliser un système comportant une caméra bispectrale pour analyser une image dans le domaine des radiations visibles et une image dans le domaine des radiations infrarouges ; et comportant deux moniteurs monochromes placés côte à côte. Mais l'exploitation de deux moniteurs côte à côte est trop lente et trop fatigante pour l'opérateur.

Il est envisageable aussi d'utiliser un seul moniteur monochrome, recevant un signal vidéo obtenu en combinant linéairement les deux signaux vidéo fournis par la caméra. L'expérience montre que l'image affichée est plate, car les contrastes d'intensité dans les deux domaines se compensent plus ou moins, au moment où les deux signaux sont combinés.

Le but de l'invention est de proposer un système permettant de visualiser sur un moniteur unique une image obtenue en exploitant simultanément le domaine des radiations infrarouges et le domaine des radiations visibles, malgré les inversions de contraste entre ces deux domaines.

L'objet de l'invention est un système de prise de vues comportant : une caméra bispectrale fournissant deux signaux vidéo ; et un mélangeur réalisant trois combinaisons linéaires de ces trois signaux, pour fournir trois signaux de couleur à un moniteur classique de télévision en couleurs. Le moniteur affiche une image qui équivaut à la somme d'une image de couleur ocre traduisant une vue dans le domaine des radiations infrarouges proches, et d'une image de couleur bleue saphir traduisant la même vue mais dans le domaine des radiations visibles. Le moniteur affiche simultanément des détails correspondant au domaine des radiations visibles et des détails correspondant au domaine des radiations infrarouges, sans que les contrastes se compensent, grâce à la différence de couleur. Ce système permet à l'opérateur de repérer des cibles plus rapidement que les systèmes classiques, puisqu'il permet de mieux percevoir les détails de faibles dimensions. Il permet aussi de mieux séparer les différents plans de la scène observée, et permet donc de mieux apprécier les distances relatives des différents éléments de la scène.

Selon l'invention, un système de prise de vues bispectrales et de visualisation en fausses couleurs, équipé :

- de moyens pour analyser une image dans le domaine des radiations visibles, et pour analyser une image dans le domaine des radiations infrarouges, fournissant un premier et un second signal vidéo correspondant respectivement à ces deux domaines ;
- et des moyens pour afficher une image en couleurs, par addition de trois couleurs primaires, commandés par trois signaux de couleur,

est caractérisé en ce qu'il comporte :

- des moyens pour mélanger les deux signaux vidéo et en déduire les trois signaux dit de couleur, chacun étant une combinaison linéaire des deux premiers signaux vidéo de sorte que l'image affichée équivaut à la somme de deux images de deux couleurs non primaires ;
- et des moyens pour affecter chaque combinaison de coefficients réglables à partir d'une variable, en fonction du domaine 30 spectral, visible ou infrarouge, à privilégier ;

L'invention sera mieux comprise et d'autres détails apparaîtront à l'aide de la description ci-dessous et des figures l'accompagnant :

- la figure 1 représente le schéma synoptique d'un exemple de réalisation du système selon l'invention ;
- les figures 2 et 3 représentent deux diagrammes illustrant le fonctionnement du système selon l'invention ;
- la figure 4 représente le schéma synoptique d'un premier mode de réalisation d'une partie de l'exemple de réalisation présenté sur la figure 1 ;
- la figure 5 représente le schéma synoptique d'un second mode de réalisation de cette partie.

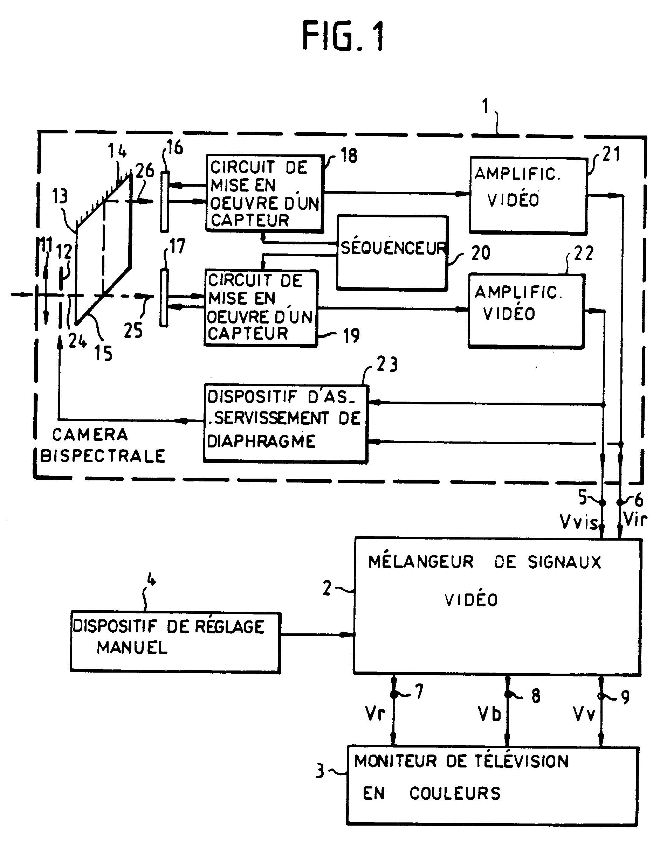

L'exemple de réalisation représenté sur le figure 1 comporte : une caméra bispectrale 1 ; un mélangeur de signaux vidéo, 2 ; un moniteur de télévision en couleurs, 3 ; et un dispositif 4 de réglage manuel.

Le moniteur 3 est un moniteur classique, à tube cathodique à masque par exemple, permettant de reproduire pratiquement toutes les couleurs à partir de trois couleurs primaires : rouge, verte, bleue.

La caméra bispectrale 1 comporte : un objectif d'entrée 11 ; un diaphragme réglable 12 ; un séparateur 13 ; deux capteurs matriciels, 16, 17, à transfert de charges, en silicium ; deux circuits, 18 et 19, de mise en oeuvre des capteurs ; un séquenceur 20 deux amplificateurs vidéo, 21 et 22 ; et un dispositif 23 d'asservissement du diaphragme.

Le séparateur 13 est constitué d'un polygone de verre comportant : une face 15 inclinée de 45° par rapport à l'axe optique de l'objectif 11 et du diaphragme 12, recouverte d'un dépôt dichroïque réfléchissant les radiations infrarouges et laissant passer les radiations visibles ; et une face 14 parallèle à la face 15 et recouverte d'un dépôt métallique constituant un miroir. Le séparateur 13 sépare un faisceau lumineux 24 reçu par la caméra, en deux faisceaux parallèles, 26 et 25, constitués respectivement de radiations infrarouges et de radiations visibles. Ces deux faisceaux forment deux images respectivement sur les deux capteurs 16 et 17.

Les circuits 18 et 19 possèdent des premières entrées reliées respectivement à des sorties des capteurs 16 et 17 ; et des secondes entrées reliées à des sorties du séquenceur 20 qui leur fournit des signaux d'horloge. Les capteurs 16 et 17 fournissent aux circuits 18 et 19 deux signaux correspondant respectivement à l'intensité des radiations infrarouges et à l'intensité des radiations visibles. Des premières sorties des circuits 18 et 19 sont reliées respectivement à des entrées des capteurs 16 et 17 pour leur fournir des signaux de commande nécessaires à la mise en oeuvre de ces capteurs. Les circuits 18 et 19 sont adaptés au type des capteurs utilisés, et leur réalisation est classique.

Des secondes sorties des circuits 18 et 19 sont reliées respectivement à des entrées des amplificateurs vidéo 21 et 22. Ces derniers ont des sorties reliées respectivement à des bornes de sorties 5 et 6 de la caméra 1, et elles fournissent respectivement des signaux vidéo Vvis et Vir représentant respectivement une même vue analysée dans le domaine des radiations visibles et dans le domaine des radiations infrarouges. Le dispositif 23 d'asservissement du diaphragme possède deux entrées reliées respectivement aux deux sorties des amplificateurs vidéo 21 et 22, et une sortie commandant un dispositif électromécanique réglant le diaphragme 12, de façon à obtenir une luminosité correcte à la fois sur le capteur 16 et sur le capteur 17.

Les bornes de sorties 5 et 6 sont reliées respectivement à deux entrées du mélangeur 2. Ce dernier possède en outre une entrée reliée à un dispositif 4 de réglage manuel, et trois bornes de sorties, 7 à 9, reliées respectivement à trois entrées du moniteur 3. Le mélangeur 2 fournit, par ces trois bornes de sorties, trois signaux : Vr, Vb, Vv, appelés signaux de couleur, destinés à commander l'intensité de la couleur rouge, l'intensité de la couleur bleue, et l'intensité de la couleur verte, pour chaque élément d'image reproduit sur l'écran du moniteur 3.

Ces trois signaux sont chacun constitués d'une combinaison linéaire des deux signaux Vvis et Vir. Les coefficients des trois combinaisons linéaires sont réglables au moyen du dispositif 4. Deux exemple de réalisation du mélangeur 2 seront décrits plus loin.

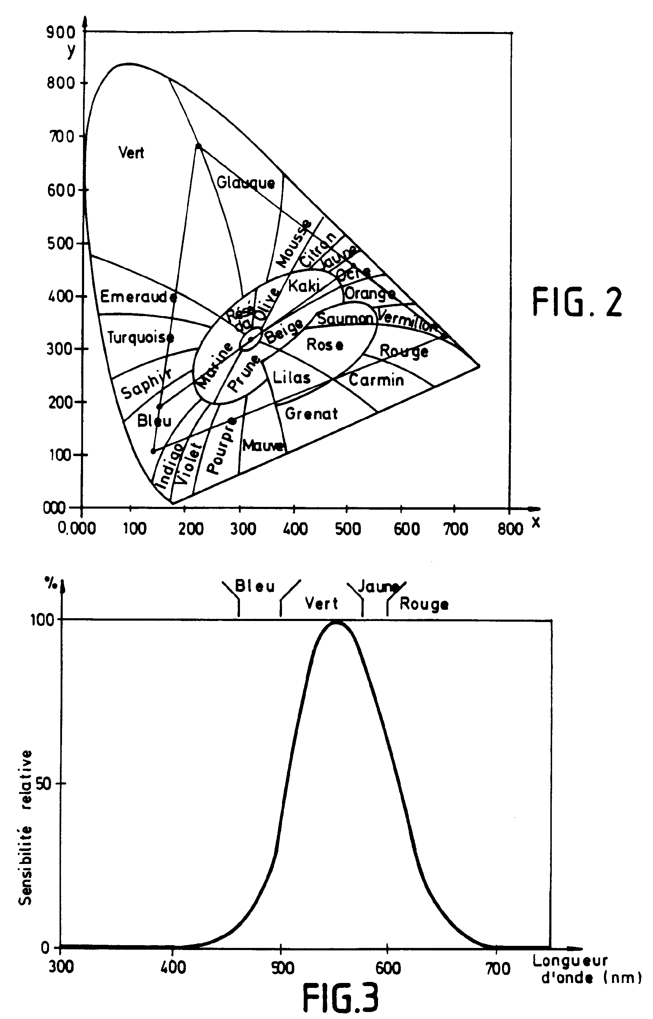

La figure 2 représente un diagramme établi par la Commission Internationale de l'Eclairage, et représentant dans un repère à deux dimensions, toutes les couleurs existant dans le domaine des radiations visibles. Il comporte trois points repérant trois couleurs primaires normalisées pour reproduire des images de télévision en couleurs. Ces trois points sont situés respectivement : à la frontière du vert et du glauque ; à la frontière du vermillon et du rouge ; et dans le bleu. Ces trois points définissent un triangle qui contient toutes les couleurs réalisables en mélangeant, dans des proportions variables, ces trois couleurs.

Les tubes cathodiques utilisés classiquement dans les moniteurs de télévision en couleurs comportent trois types de luminophore émettant respectivement trois couleurs correspondant, avec une bonne approximation, aux trois points fixés par la Commission Internationale de l'Eclairage. Lorsque les luminophores des trois types sont excités de manière égale, l'addition des trois couleurs émises produit la couleur blanche qui est représentée au centre du triangle.

L'image obtenue sur le moniteur 3, grâce au mélangeur 2, doit faire apparaître à la fois les informations contenues dans les radiations visibles et les informations contenues dans les radiations infrarouges, mais en outre cette image ne doit pas choquer l'oeil par une représentation trop éloignée des couleurs naturelles. Par exemple, les arbres représentés en bleu et le ciel représenté en vert constitueraient une image choquante. D'autre part, il n'est pas possible d'utiliser directement deux des couleurs primaires : rouge, verte, bleue, car cela conduirait à un déséquilibre de définition, l'oeil étant moins sensible dans le bleu et dans le rouge, que dans le vert.

Enfin, l'utilisation de deux couleurs primaires seulement, par exemple le rouge et le bleu, ne permettrait pas d'obtenir du blanc et donnerait donc une image dans laquelle les fausses couleurs seraient choquantes car trop éloignées des couleurs réelles.

La figure 3 est un diagramme représentant la sensibilité relative de l'oeil en fonction de la longueur d'onde. Il apparaît sur ce diagramme que la sensibilité de l'oeil est très élevée pour les couleurs vertes et jaunes ; et nettement plus faible pour les couleurs bleues et les couleurs rouges. D'autre part, pour qu'une observation prolongée ne soit pas fatigante, l'image affichée par le moniteur doit être pastel. Une image pastel est très proche d'une image réelle obtenue à une distance de plusieurs kilomètres, car une telle distance a pour effet de délaver les couleurs.

Pour obtenir des images pastel jaunes-vertes, le système selon l'invention affiche une image qui équivaut à l'addition de deux images ayant respectivement deux couleurs qui sont différentes des trois couleurs primaires classiques : rouge, verte, bleue. Une première couleur est ocre et une seconde couleur est à la frontière du bleu et du saphir. L'image ocre reproduit les radiations infrarouges alors que l'image bleu saphir reproduit les radiations visibles. L'image résultante est affichée sur un moniteur de télévision classique en utilisant les trois couleurs primaires classiques. La couleur ocre est donc obtenue en mélangeant du rouge et du vert, alors que la couleur bleue saphir est obtenue en mélangeant du bleu avec une petite quantité de vert. Comme cela est représenté sur la figure 2, le blanc peut être obtenu par combinaison de la couleur ocre et de la couleur bleue saphir. L'image affichée peut donc comporter des zones blanches, ce qui est particulièrement important pour obtenir une image proche du réel.

Le mélangeur 2, dans cet exemple de réalisation, détermine les trois signaux de couleur selon les formules suivantes :

$$Vr = (1 - k).0,3.Vir \quad (1)$$
$$Vv = k.0,3.Vis + (1 - k).0,7.Vir \quad (2)$$
$$Vb = k.0,7.Vvis \quad (3)$$

où k est un nombre variable entre 0 et 1, en fonction du réglage manuel effectué par le dispositif 4. Lorsque le réglage manuel est en position médiane, k est égal à 0,5. Dans ce cas, l'image affichée est de couleur bleue saphir lorsque le signal vidéo Vvis est non nul et que le signal vidéo Vir est nul. Et l'image affichée est de couleur ocre lorsque le signal vidéo Vir est non nul et que le signal vidéo Vvis est nul. En pratique, les deux signaux étant non nuls, l'image affichée comporte toutes les nuances entre le bleu saphir et l'ocre, en passant par le blanc. Les contrastes de l'image bleue saphir ne compensent pas les contrastes de l'image ocre, ce qui permet d'observer à la fois les contrastes des radiations infrarouges et les contrastes des radiations visibles.

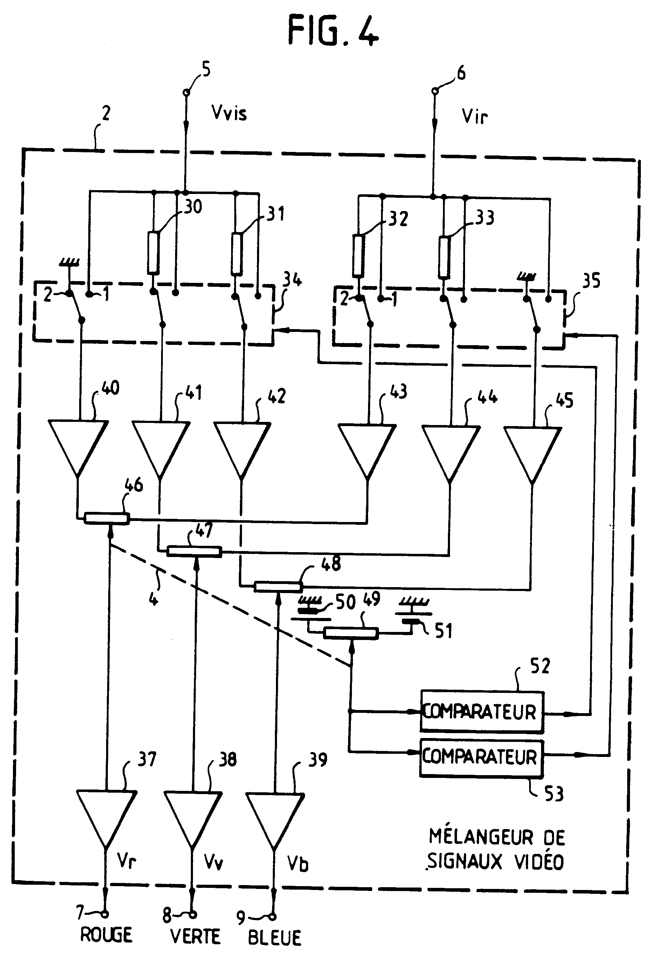

La figure 4 représente un premier mode de réalisation du mélangeur 2. Ce mode de réalisation est de type analogique. Il comporte : quatre résistances 30 à 33 ; deux multiplexeurs 34 et 35, ayant chacun six entrées de données, trois sorties, et une entrée de commande ; neuf amplificateurs identiques 37 à 45 ; quatre potentiomètres 46 à 49, ayant la même valeur de résistance et dont le curseur est commandé par un même axe ; deux générateurs de tension continue, 50 et 51 ; et deux comparateurs, 52 et 53.

Les coefficients k et 1-k sont déterminés en réglant les potentiomètres 46 à 48. Dans cet exemple de réalisation, il est prévu de limiter automatiquement la plage de réglage du coefficient k entre 0,3 et 0,7 , en réalisant des commutations telles que l'image affichée sur le moniteur 3 devient une image monochrome en noir et blanc lorsque le réglage manuel 4 dépasse les positions correspondant à ces deux valeurs de k.

Ainsi, lorsque le réglage manuel 4 privilégie la vue dans le domaine des radiations infrarouges, l'image affichée devient monochrome en noir et blanc, au lieu d'être monochrome ocre. Lorsque le réglage manuel 4 privilégie la vue dans le domaine des radiations visibles, l'image affichée est monochrome en noir et blanc, au lieu d'être monochrome bleue. Cette commutation automatique permet donc l'observation d'une image plus agréable dans le cas où l'observateur privilégie l'un des deux domaines de radiation.

Dans cet exemple de réalisation, un potentiomètre supplémentaire, 49, est utilisé pour détecter la position du réglage manuel 4. Les deux extrémités du potentiomètre 49 sont reliées respectivement aux générateurs de tension 50 et 51, qui fournissent des tensions continues symétriques par rapport à un potentiel de référence. Le curseur du potentiomètre 49 est relié à des entrées des comparateurs 52 et 53 pour comparer la tension fournie par le curseur, à deux tensions de seuil, prédéterminées, correspondant respectivement à deux positions telles que k = 0,3 et k = 0,7.

Les comparateurs 52 et 53 possèdent deux sorties reliées respectivement à une entrée de commande du multiplexeur 34 et à une entrée de commande du multiplexeur 35. Le comparateur 52 commande un changement d'état du multiplexeur 34 lorsque la position du réglage 4 correspond à une valeur k supérieure à 0,7. Le comparateur 53 commande un changement d'état du multiplexeur 35 lorsque la position du réglage 4 correspond à une valeur k inférieure à 0,3.

La détection de ces deux positions extrêmes du réglage manuel 4 pourrait être réalisée aussi bien au moyen de deux commutateurs actionnés par l'axe commun aux potentiomètres 46 à 48.

Le multiplexeur 34, respectivement le multiplexeur 35, possède trois premières entrées qui sont reliées respectivement aux trois sorties, lorsque le multiplxeur 34 est dans un premier état qui est noté 1 sur la figure 4 ; et il relie trois secondes entrées aux trois sorties, dans un second état qui est noté 2. Les multiplexeurs 34 et 35 sont représentés sur la figure 4 dans ce second état, qui correspond à l'affichage d'une image traduisant simultanément le domaine des radiations visibles et le domaine des radiations infrarouges.

Considérons successivement les moyens utilisés pour déterminer : un signal de couleur rouge Vr, un signal de couleur verte Vv, et un signal de couleur bleue Vb. La borne de sortie 7, qui fournit le signal de couleur rouge Vr, est reliée à la sortie d'un amplificateur 37 dont l'entrée est reliée au curseur du potentiomètre 46. Les deux extrémités du potentiomètre 46 sont reliées respectivement à la sortie des amplificateurs 40 et 43. L'entrée de l'amplificateur 40 est reliée à une première sortie du multiplexeur 34 alors que l'entrée de l'amplificateur 43 est reliée à une première sortie du multiplexeur 35. Dans son second état, le multiplexeur 34 relie sa première sortie au potentiel de référence. Dans son second état, le multiplexeur 35 relie sa première sortie à une extrémité de la résistance 32. L'autre extrémité de la résistance 32 est reliée à la borne d'entrée 6 qui reçoit le signal Vir.

Les amplificateurs 37 à 45 ont tous le même gain, par exemple égal à l'unité, et ont tous la même valeur de résistance d'entrée. Les coefficients des combinaisons linéaires des signaux Vvis et Vir sont réalisés au moyen des résistances 30 à 33, en association avec les résistances d'entrée des amplificateurs 41 à 44. Pour obtenir le signal de couleur rouge, un signal de valeur nulle est appliqué à l'entrée de l'amplificateur 40 et le signal Vir est appliqué à l'entrée de l'amplificateur 43 avec une atténuation égale à 0,3 , réalisée par la résistance 32 et la résistance d'entrée, non représentée, de l'amplificateur 43. Le curseur du potentiomètre 46 fournit donc un signal conforme à la formule (1). L'amplificateur 37 transmet ce signal à la borne de sortie 7, avec une faible résistance de sortie.

Le signal de couleur verte V est fourni par la borne de sortie 8 qui est reliée à la sortie de l'amplificateur 38. L'entrée de ce dernier est reliée au curseur du potentiomètre 47. Les deux extrémités du potentiomètre 47 sont reliées respectivement aux sorties des amplificateurs 41 et 43. Lorsque le multiplexeur 34 est dans son second état, il relie sa deuxième sortie à une entrée à laquelle est connectée une première extrémité de la résistance 30. Une seconde extrémité de la résistance 30 est reliée à la borne d'entrée 5. Le signal Vvis subit une atténuation égale à 0,3 dans l'atténuateur constitué par la résistance 30 et la résistance d'entrée, non représentée, de l'amplificateur 41. Lorsque le multiplexeur 35 est dans son second état, sa deuxième sortie relie l'entrée de l'amplificateur 44 à une première extrémité de la résistance 33. La seconde extrémité de la résistance 33 est reliée à la borne d'entrée 6. Le signal Vir subit une atténuation égale à 0,7 dans l'atténuateur constitué par la résistance 33 et par la résistance entrée, non représentée de l'amplificateur 44. Ainsi, le signal fourni par le curseur du potentiomètre 47 est conforme à la formule (2). L'amplificateur 38 transmet ce signal à la borne de sortie 8, avec une faible résistance de sortie.

Le signal de couleur bleue, Vb est fourni par la borne de sortie 9 qui est reliée à la sortie de l'amplificateur 39. L'entrée de ce dernier est reliée au curseur du potentiomètre 48. Les deux extrémités du potentiomètre 48 sont reliées respectivement aux sorties des amplificateurs 42 et 45. Une entrée de l'amplificateur 42 et une entrée de l'amplificateur 45 sont reliées respectivement à la troisième sortie du multiplexeur 34 et à la troisième sortie du multiplexeur 35. Lorsque le multiplexeur 34 est dans son second état, il relie sa troisième sortie à une première extrémité de la résistance 31. Une seconde extrémité de la résistance 31 est reliée à la borne d'entrée 5. Ainsi, le signal Vvis subit une atténuation égale à 0,7 , dans l'atténuateur constitué par la résistance 31 et par la résistance d'entrée, non représentée, de l'amplificateur 42. Lorsque le multiplexeur 35 est dans son second état, il relie sa troisième sortie au potentiel de référence. Le curseur du potentiomètre 48 fournit donc un signal conforme à l'équation (3). L'amplificateur 39 transmet ce signal à la borne de sortie 9, avec une faible résistance de sortie.

Lorsque le réglage est tel que k est inférieur à 0,3, le comparateur 52 commande le multiplexeur 35 pour qu'il passe dans son premier état. Il relie alors directement la borne d'entrée 6 aux entrées des amplificateurs, 43 à 45. Les trois signaux fournis par les curseurs des potentiomètres 46 à 48 sont alors pratiquement identiques au signal Vir. Ils permettent d'obtenir trois signaux Vr, Vb, Vv pratiquement identiques à Vir, afin d'afficher une image monochrome en noir et blanc, et non ocre, pour observer le domaine des radiations infrarouges seulement.

De même, lorsque le réglage est tel que k est supérieur à 0,7 , le comparateur 53 commande le multiplexeur 34 pour qu'il passe dans son premier état. Il relie alors directement la borne d'entrée 5 aux entrées des amplificateurs, 40 à 42. Les trois signaux fournis par les curseurs des potentiomètres 46 à 48 sont alors pratiquement identiques au signal Vvis. Ils permettent d'obtenir trois signaux Vr, Vb, Vv pratiquement identiques au signal Vvis, afin d'afficher une image monochrome en noir et blanc, et non en bleu saphir, pour observer le domaine des radiations visibles seulement.

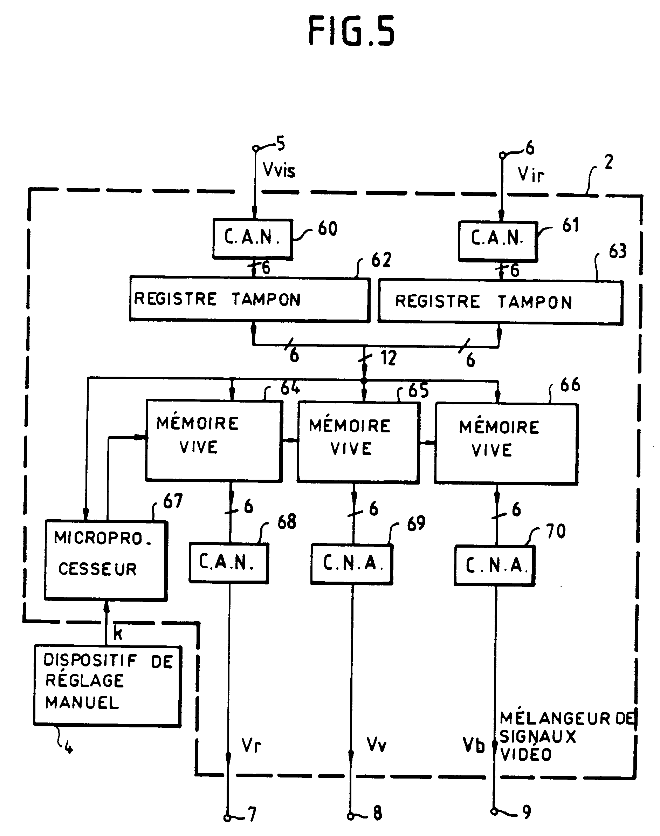

La figure 5 représente le schéma synoptique d'un autre mode de réalisation du mélangeur 2. Ce mode de réalisation est de type numérique. Il comporte : deux convertisseurs analogique-numériques, 60 et 61 ; deux registres tampons 62 et 63, stockant chacun un mot binaire de 6 bits ; trois mémoires vives 64, 65, 66 ; trois convertisseurs numériques-analogiques 68, 69, 70 ; un microprocesseur 67.

Les bornes d'entrée 5 et 6 sont reliées respectivement à des entrées des convertisseurs analogiques-numériques 60 et 61 qui échantillonnent et convertissent respectivement les signaux Vvis et Vir en mots binaires de 6 bits. Les sorties des convertisseurs 60 à 61 sont reliées respectivement à des entrées de données des registres tampons 62 et 63. Les sorties de données des registres 62 et 63 fournissent en parallèle deux mots binaires de 6 bits qui constituent un mot binaire de 12 bits. Ce dernier est appliqué simultanément à une entrée d'adresse de chacune des mémoires vives 64 à 66, et à une entrée du microprocesseur 67. Des sorties de données des mémoires 64 à 66 sont reliées respectivement à des entrées des convertisseurs numériques-analogiques 68 à 70 pour leur fournir à chacun un mot de 6 bits. Des sorties des convertisseurs 68 à 70 sont reliées respectivement aux 3 bornes de sorties 7, 8, 9, et leur fournissent respectivement trois signaux de couleur : Vr, Vv, Vb.

Une sortie du microprocesseur 67 est reliée à des entrées de données et à des entrées d'adresse des mémoires vives 64 à 66. Une entrée du microprocesseur 67 est reliée à une sortie d'un dispositif de réglage manuel 4 qui peut être constitué, par exemple, d'un bouton et d'un capteur de position fournissant un mot binaire qui traduit la position du bouton. Tous les éléments du mélangeur 2 reçoivent des signaux d'horloge fournis par un générateur classique de signaux d'horloge, non représenté.

Les mémoires vives 64 à 66 ont chacune pour fonction de stocker une table qui, à un mot binaire de 12 bits, constitué d'une valeur de Vir et d'une valeur de Vvis, fait correspondre un mot binaire de 6 bits. La valeur de chacun de ces trois mots binaires est donnée respectivement par les équations (1), (2), (3). Les valeurs constituant les tables sont calculées par le microprocesseur 67 conformément à ces équations, puis stockées dans les mémoires 64 à 66, chaque fois que le dispositif de réglage manuel 4 fournit une nouvelle valeur du coefficient k.

D'autre part, il est prévu de revenir à l'affichage d'une image monochrome en noir et blanc, ne comportant que les informations apportées par les radiations visibles, lorsque le domaine des radiations infrarouges contient peu d'informations. Réciproquement, il est prévu de revenir automatiquement à l'affichage d'une image monochrome en noir et blanc, ne comportant que les informations apportées par les radiations infrarouges, lorsque le domaine des radiations visibles comporte peu d'informations. Une étude des informations contenues dans les deux domaines est réalisée en calculant un histogramme des valeurs de luminance de chacune des deux images.

Cette fonction est réalisée par le microprocesseur 67 qui reçoit sur une entrée chaque couple de mots binaires de 6 bits représentant les signaux Vvis et Vir. Si l'histogramme de l'image obtenue dans l'un des domaines montre que cette image contient peu d'informations, le microprocesseur 67 décide d'afficher, en noir et blanc, l'image obtenue dans l'autre domaine, sous réserve que l'histogramme correspondant à ce dernier montre qu'il contient plus d'informations. Le microprocesseur 67 détermine et stocke dans les mémoires 66 à 69, trois nouvelles tables de valeurs. Ces tables sont identiques entre elles et telles que :

Vr = Vb = Vv = Vir ou

Vr = Vb = Vv = Vis, selon le cas.

La programmation du microprocesseur 67 pour : calculer les tables ; les stocker dans les mémoires vives 64 à 66 ; calculer les histogrammes ; et décider de présenter les informations des deux domaines simultanément ou bien de ne présenter que les informations d'un seul domaine ; est à la portée de l'homme de l'art.

L'invention est particulièrement applicable aux dispositifs de visée et de poursuite de cible portés par des véhicules terrestres.

**Revendications**

1. Système de prise de vues bispectrales et de visualisation en fausses couleurs équipé :
   - de moyens (1) pour analyser une image dans le domaine des radiations visibles, et pour analyser une image dans le domaine des radiations infrarouges, fournissant un premier et un second signal vidéo (Vvis, Vir) correspondant respectivement à ces deux domaines ;
   - et des moyens (3) pour afficher une image en couleurs, par addition de trois couleurs primaires, commandés par trois signaux de couleur (Vr, Vv, Vb).
   caractérisé en ce qu'il comporte :
   - des moyens (2) pour mélanger les deux signaux vidéo et en déduire les trois signaux dit de couleur (Vr, Vv, Vb), chacun étant une combinaison lineaire des deux premiers signaux vidéo de sorte que l'image affichée équivaut à la somme de deux images de deux couleurs non primaires ;
   - et des moyens (4) pour affecter chaque combinaison de coefficients réglables à partir d'une variable, en fonction du domaine spectral, visible ou infrarouge, à privilégier ;

2. Système selon la revendication 1, caractérisé en ce que les combinaisons linéaires réalisées par les moyens (2) pour mélanger les deux signaux vidéo, sont telles que, lorsque les moyens (4) pour régler les coefficients sont réglés au centre de leur plage de réglage, l'image affichée est :
   - de couleur bleue saphir lorsque le premier signal vidéo (Vvis) est non nul et que le second signal vidéo (Vir) est nul ;
   - de couleur ocre lorsque le second signal vidéo (Vir) est non nul et que le premier signal video (Vvis) est nul.

3. Système selon la revendication 1, caractérisé en ce que les moyens (2) pour mélanger les deux signaux vidéo comportent des moyens de commutation automatique (34, 35, 52, 53) pour fournir trois signaux de couleur pratiquement égaux au signal video correspondant au domaine des radiations visibles, respectivement au domaine des radiations infrarouges, lorsque les coefficients réglables atteignent deux valeurs de seuil prédéterminées.

4. Système selon la revendication 1, caractérisé en ce que les moyens (2) pour mélanger les deux signaux video comportent :
   - des moyens de calcul (67) pour calculer trois tables de valeurs des trois signaux de couleur (Vr, Vv, Vo) respectivement, en fonction d'une valeur variable (k) fournie par les moyens (4) pour regler les coefficients ;
   - des moyens (64 à 66) pour stocker les trois tables, comportant une entrée d'adresse de lecture recevant un mot d'adresse constitué par une valeur de chacun des deux signaux vidéo (Vir, Vvis).

5. Système selon la revendication 4, caractérisé en ce que les moyens pour mélanger les deux signaux vidéo comportent en outre : des moyens de calcul (67) pour :
   - determiner un histogramme de l'image dans le domaine des radiations visibles et un histogramme de l'image dans le domaine des radiations infrarouges ;
   - détecter si l'image obtenue dans l'un des deux domaines de radiations contient peu d'informations ;
   - calculer trois nouvelles tables de valeurs, pour afficher en noir et blanc l'image obtenue dans un seul domaine de radiations, si l'image obtenue dans l'autre domaine contient peu d'informations.

**Patentansprüche**

1. System zur Bildaufzeichnung in zwei Spektren und zur Fehlfarbenanzeige,
   - mit Mitteln (1) zur Analyse eines Bilds im sichtbaren Wellenlängenbereich und zur Analyse eines Bilds im Infrarotwellenlängenbereich, wobei diese Mittel ein erstes und ein zweites Videosignal (Vvis, Vir) entsprechend diesen beiden Wellenlängenbereichen liefern,
   - und mit Mitteln (3), die ein Bild in Farbe durch Addition von drei Primärfarben anzeigen, wobei diese Mittel von drei Farbsignalen (Vr, Vv, Vb) gesteuert werden,
dadurch gekennzeichnet, daß das System enthält:
- Mittel (2), um die beiden Videosignale zu mischen und daraus die drei Farbsignale (Vr, Vv, Vb) abzuleiten, die je eine lineare Kombination der beiden ersten Videosignale sind, derart, daß das angezeigte Bild der Summe von zwei Bildern von zwei Farben gleicht, die keine Primärfarben sind,
- und Mittel (4), um jede Kombination aufgrund einer Variablen mit einstellbaren Koeffizienten gemäß dem zu bevorzugenden Wellenlängenbereich, d.h. dem sichtbaren oder dem Infrarotbereich, zu versehen.

2.  System nach Anspruch 1, dadurch gekennzeichnet, daß die von den Mitteln (2) zum Mischen der beiden Videosignale gebildeten linearen Kombinationen so gewählt sind, daß bei einer Mittelstellung der Mittel (4) zur Einstellung der Koeffizienten das dargestellte Bild
- saphirblau ist, wenn das erste Videosignal (Vvis) ungleich Null und das zwei Videosignal (Vir) gleich Nul ist,
- ockerfarben ist, wenn das zwei Videosignal (Vir) ungleich Null und das erste Videosignal (Vvis) gleich Null ist.

3.  System nach Anspruch 1, dadurch gekennzeichnet, daß die Mittel (2) zum Mischen der beiden Videosignale automatische Umschaltmittel (34, 35, 52, 53) aufweisen, um drei praktisch gleich große und dem Videosignal entsprechend dem sichtbaren bzw. infraroten Wellenlängenbereich gleichende Farbsignale zu liefern, wenn die einstellbaren Koeffizienten zwei vorgegebene Schwellwerte erreichen.

4.  System nach Anspruch 1, dadurch gekennzeichnet, daß die Mittel (2) zum Mischen der beiden Videosignale aufweisen:
- Mittel (67) zur Berechnung von drei Wertetabellen der drei Farbsignale (Vr, Vv, Vb) abhängig von einer variablen Größe (k), die von den Mitteln (4) zur Einstellung der Koeffizienten geliefert wird, Mittel (64 bis 66) zur Speicherung der drei Tabellen mit einem Leseadresseneingang, der ein Adressenwort empfängt, das von einem Wert jedes der beiden Videosignale (Vir, Vvis) gebildet wird.

5.  System nach Anspruch 4, dadurch gekennzeichnet, daß die Mittel zum Mischen der beiden Videosignale außerdem Rechenmittel (67) aufweisen,
- um je ein Histogramm des Bildes im sichtbaren Wellenlängenbereich und im Infrarotbereich zu bestimmen,
- um zu erfassen, ob das in einem der beiden Wellenlängenbereiche erhaltene Bild wenig Informationen enthält,
- um drei neue Wertetabellen zu berechnen, um in schwarzweiß das in nur einem Wellenlängenbereich erhaltene Bild anzuzeigen, wenn das Bild im anderen Wellenlängenbereich wenig Informationen enthält.

## Claims

1.  System for taking bispectral pictures and for showing false colours equipped:
- with means (1) for analysing an image in the region of visible radiation, and for analysing an image in the region of infrared radiation, providing a first and a second video signal (Vvis, Vir) corresponding to these two regions respectively;
- and means (3) for displaying a colour image, by addition of three primary colours, controlled by three colour signals (Vr, Vg, Vb),
characterized in that it includes:
- means (2) for mixing the two video signals and deducing therefrom the three so-called colour signals (Vr, Vg, Vb), each being a linear combination of the first two video signals so that the displayed image is equivalent to the sum of two images of two nonprimary colours;
- and means (4) for assigning adjustable coefficients to each combination on the basis of a variable, depending on the spectral region, visible or infrared, to be favoured.

2.  System according to Claim 1, characterized in that the linear combinations effected by the means (2) for mixing the two video signals are such that, when the means (4) for adjusting the coefficients are adjusted to the centre of their adjustment range, the image displayed is:
- sapphire blue in colour when the first video signal (Vvis) is non-zero and when the second video signal (Vir) is zero;
- ochre in colour when the second video signal (Vir) is non-zero and when the first video signal (Vvis) is zero.

3.  System according to Claim 1, characterized in that the means (2) for mixing the two video signals include automatic switching means (34, 35, 52, 53) for providing three colour signals which are practically equal to the video signal corresponding to the region of visible radiation, respectively to the region of infrared radiation,

**EP 0 412 886 B1**

when the adjustable coefficients attain two predetermined threshold values.

4. System according to Claim 1, characterized in that the means (2) for mixing the two video signals include:
    - calculating means (67) for calculating three tables of values of the three colour signals (Vr, Vg, Vo) respectively, as a function of a variable value (k) provided by the means (4) for adjusting the coefficients;
    - means (64 to 66) for storing the three tables, including a read address input receiving an address word consisting of a value of each of the two video signals (Vir, Vvis).

5. System according to Claim 4, characterized in that the means for mixing the two video signals furthermore include: calculating means (67) for:
    - determining a histogram of the image in the region of visible radiation and a histogram of the image in the region of infrared radiation;
    - detecting whether the image obtained in one of the two regions of radiation contains little information;
    - calculating three new tables of values, so as to display in black and white the image obtained in a single region of radiation, if the image obtained in the other region contains little information.

# FIG. 1

FIG. 2

FIG.3

# FIG. 4

MÉLANGEUR DE SIGNAUX VIDÉO

COMPARATEUR 52

COMPARATEUR 53

Vvis 5

Vir 6

Vr Vv Vb

7 ROUGE   8 VERTE   9 BLEUE

# FIG.5